# EUROPEAN PATENT APPLICATION

(11) **EP 4 838 361 A1**
(43) Date of publication of application: **11.11.2026**
(21) Application number: 25174747.3
(22) Date of filing: 07.05.2025
(51) Int. Cl.: G06F 9/50, G06F 9/52, G06F 9/54

(54) **SYSTEM AND METHOD FOR TOKEN-BASED SYNCHRONIZATION OF ASYNCHRONOUS CO-SIMULATION ENTITIES**

(71) Applicant: Siemens Aktiengesellschaft, 80333 München (DE)
(72) Inventor: Passchier, Igor, 2548 RX The Hague (NL)
(74) Representative: Siemens Patent Attorneys

(57) **Abstract**

The present disclosure provides a system for synchronization of simulation entities in an asynchronous co-simulation environment. The system includes a coordination server entity (MSE) comprising a coordination server (MSS), and a plurality of simulation entities (SEA, SEB) each comprising a coordination client (MSC) configured to communicate with the coordination server (MSS). The coordination server (MSS) maintains a list of tokens, receives tokens from the coordination clients (MSC), processes the received tokens according to a configuration (CFG), and distributes updated token lists to all coordination clients (MSC). The communication between the coordination server (MSS) and the coordination clients (MSC) uses a peer-to-peer communication protocol. Each coordination client (MSC) sends tokens representing lifecycle states of its respective simulation entity to the coordination server (MSS), and waits for specific tokens from the coordination server (MSS) to synchronize lifecycle states with other simulation entities.

## Description

### FIELD OF INVENTION

The present disclosure relates to systems and methods for synchronizing simulation entities in distributed environments, and more particularly to a system for reliable synchronization of simulation entities in an asynchronous co-simulation environment using token-based communication and peer-to-peer messaging.

### BACKGROUND

Distributed real-time simulations have become increasingly important in various fields, including industrial control, automation systems, and manufacturing processes. These simulations allow multiple users to interact with a shared virtual environment, providing valuable insights for design, optimization, and training purposes. However, creating and managing such simulations presents several technical challenges.

One of the primary difficulties in implementing distributed real-time simulations is maintaining consistency across multiple clients while ensuring responsive performance. As the complexity and scale of simulations grow, the computational and networking requirements increase significantly. This can lead to issues with data synchronization, latency, and resource management, particularly when dealing with large numbers of simulation entities or users.

US Patent Application Publication No. 2005/0267731-A1 discloses a container-based architecture for simulation of entities in a time domain. While this prior art addresses the organization of simulation entities using containers, it does not fully resolve the challenges of efficiently distributing and synchronizing simulation data across multiple clients. The present invention improves upon this by implementing a more flexible and scalable approach to managing shared simulation objects.

Another challenge in distributed simulations is the creation and modification of simulation models. Traditional approaches often require specialized knowledge and significant development effort to create new models or modify existing ones. This can limit the adaptability and extensibility of simulation systems, making it difficult to accommodate diverse use cases and evolving requirements.

US Patent Application Publication No. 2020/0134247-A1 describes a system for simulating process entities using a shared repository. Although this prior art provides a framework for collaborative model development, it falls short in offering a comprehensive solution for real-time distributed simulations. The current invention overcomes this limitation by integrating advanced synchronization mechanisms with a flexible model creation and modification system.

International Patent Application Publication No. WO 2001/011471-A1 presents a method for distributed multi-user real-time simulations over an electronic network. While this prior art contributes to the field by addressing some aspects of multi-user interaction, it does not fully address the challenges of efficiently managing large-scale simulations with complex, interconnected entities. The present invention builds upon this work by introducing a more sophisticated approach to object management and state synchronization.

Despite these advancements, there remains a need for improved systems and methods that can efficiently handle the complexities of distributed real-time simulations. Such improvements should address the technical challenges of data distribution, synchronization, and scalability while providing a flexible framework for creating and modifying simulation models. Additionally, an ideal solution should minimize network bandwidth usage, optimize computational resources, and maintain a consistent, low-latency experience for all users across various network conditions.

### SUMMARY

This summary is provided to introduce a selection of concepts in a simplified form that are further described below in the detailed description. This summary is not intended to identify key features or essential features of the claimed subject matter, nor is it intended to be used as an aid in determining the scope of the claimed subject matter.

According to an aspect of the present disclosure, a system for synchronization of simulation entities in an asynchronous co-simulation environment is provided. The system includes a coordination server entity comprising a coordination server, and a plurality of simulation entities each comprising a coordination client configured to communicate with the coordination server. The coordination server is configured to maintain a list of tokens, receive tokens from the coordination clients, process the received tokens according to a configuration, and distribute updated token lists to all coordination clients. The communication between the coordination server and the coordination clients uses a peer-to-peer communication protocol. Each coordination client is configured to send tokens representing lifecycle states of its respective simulation entity to the coordination server, and wait for specific tokens from the coordination server to synchronize lifecycle states with other simulation entities.

According to other aspects of the present disclosure, the system may implement the peer-to-peer communication protocol using ZeroMQ (ZMQ), a high-performance asynchronous messaging library. ZeroMQ may provide a flexible and scalable foundation for the token-based synchronization mechanism between the coordination server and clients.

In some implementations, the system may utilize ZeroMQ's publish-subscribe pattern for efficient distribution of token updates. The coordination server may act as a publisher, while the coordination clients act as subscribers. This approach may allow for one-to-many communication, where a single message from the server can be efficiently distributed to multiple clients.

The system may employ ZeroMQ's REQ-REP (request-reply) pattern for direct communication between individual coordination clients and the coordination server. This pattern may be used when a client needs to send a specific token or request to the server and await a response.

To enhance security and ensure data integrity, the system may implement encryption and authentication mechanisms provided by ZeroMQ's CurveZMQ protocol. This may allow for secure communication between the coordination server and clients, even when operating in untrusted network environments.

The peer-to-peer nature of ZeroMQ may allow the system to operate without a centralized broker, potentially reducing latency and improving overall system responsiveness. In some aspects, the system may leverage ZeroMQ's support for various transport protocols, including TCP, IPC, and in-process communication, providing flexibility in deployment across different network configurations.

To optimize performance, the system may utilize ZeroMQ's asynchronous I/O model, which may allow for efficient handling of multiple connections without blocking operations. This approach may be particularly beneficial when dealing with a large number of simulation entities or high-frequency token exchanges.

In some implementations, the system may use Protocol Buffers (protobuf) in conjunction with ZeroMQ for efficient serialization and deserialization of token data. This combination may provide a compact binary format for token representation, potentially reducing network bandwidth usage and improving overall system performance.

The peer-to-peer communication protocol may support dynamic discovery and connection of coordination clients to the coordination server. This may allow for flexible scaling of the simulation environment, where new simulation entities can be added or removed without significant reconfiguration of the communication infrastructure.

In certain aspects, the system may implement a heartbeat mechanism using ZeroMQ to detect and handle network failures or disconnections between the coordination server and clients. This may enhance the overall reliability and fault tolerance of the co-simulation environment.

By leveraging these features of ZeroMQ and related technologies, the system may provide a robust and efficient peer-to-peer communication infrastructure for token-based synchronization in asynchronous co-simulation environments.

According to other aspects of the present disclosure, the system may include one or more of the following features. The coordination server may be configured to generate additional tokens based on the received tokens and the configuration. The configuration may define rules for generating the additional tokens based on combinations of received tokens. The system may further comprise a software in the loop entity comprising a software in the loop component and a coordination client. The software in the loop entity and the simulation entities may be implemented as separate containers in a cloud computing environment. Each simulation entity may further comprise simulation software configured to perform co-simulation tasks. The coordination clients may be configured to manage lifecycle states of their respective simulation software based on the tokens received from the coordination server.

The coordination server may employ a rule-based system for generating additional tokens based on the received tokens and the configuration. This token generation process may involve analyzing the current state of the simulation environment, evaluating predefined conditions, and applying logical operations to determine when and how to create new tokens.

In some implementations, the configuration may define a set of token generation rules using a domain-specific language or a structured format such as JSON or XML. These rules may specify conditions that trigger the generation of new tokens, as well as the properties and values of the tokens to be created.

The token generation process may involve the following steps:
1. Token reception: The coordination server receives tokens from various coordination clients.
2. State update: The server updates its internal representation of the simulation state based on the received tokens.
3. Rule evaluation: The server evaluates the token generation rules defined in the configuration against the current simulation state.
4. Token creation: When the conditions specified in a rule are met, the server generates one or more new tokens according to the rule's specifications.
5. Token distribution: The newly generated tokens are added to the updated token list and distributed to all coordination clients.

The configuration may allow for complex rule definitions that take into account multiple factors, such as the presence or absence of specific tokens, the values of token attributes, timing conditions, or the overall simulation progress.

For example, a token generation rule may be defined as follows:
When tokens "A_READY" and "B_READY" are present, and token "SIMULATION_STARTED" is absent, generate a new token "ALL_ENTITIES_READY" with a timestamp attribute set to the current simulation time.
In this case, the coordination server would monitor the received tokens for the presence of "A_READY" and "B_READY" tokens. Once both of these tokens are received, and if the "SIMULATION_STARTED" token is not present in the current token list, the server would generate a new "ALL_ENTITIES_READY" token. This new token may then trigger subsequent actions or state changes in the simulation entities upon distribution.

The token generation process may also incorporate more advanced features, such as:
1. Priority-based rule execution, where certain rules take precedence over others.
2. Conditional token attribute assignment, allowing for dynamic setting of token properties based on the current simulation state.
3. Temporal logic, enabling the creation of tokens based on sequences of events or time-based conditions.
4. Aggregation functions, allowing for the generation of tokens that summarize or combine information from multiple existing tokens.

By providing a flexible and powerful token generation mechanism, the system may adapt to a wide range of simulation scenarios and requirements, enhancing its versatility and applicability across different domains and use cases.

According to another aspect of the present disclosure, a method for synchronization of simulation entities in an asynchronous co-simulation environment is provided. The method includes maintaining, by a coordination server, a list of tokens, and receiving, by the coordination server, tokens from a plurality of coordination clients associated with respective simulation entities. The method further includes processing, by the coordination server, the received tokens according to a configuration, distributing, by the coordination server, updated token lists to all coordination clients, sending, by each coordination client, tokens representing lifecycle states of its respective simulation entity to the coordination server, and waiting, by each coordination client, for specific tokens from the coordination server to synchronize lifecycle states with other simulation entities.

According to other aspects of the present disclosure, the method may include one or more of the following features. The method may include generating, by the coordination server, additional tokens based on the received tokens and the configuration. The configuration may define rules for generating the additional tokens based on combinations of received tokens. The method may include implementing the coordination server and the coordination clients in separate containers in a cloud computing environment. The containers may include a software in the loop entity comprising a software in the loop component and a coordination client. The method may include performing, by simulation software in each simulation entity, co-simulation tasks based on the synchronized lifecycle states. The method may include managing, by each coordination client, lifecycle states of its respective simulation software based on the tokens received from the coordination server.

The software in the loop entity may be implemented as a specialized container within the cloud computing environment, designed to integrate software components into the co-simulation process. This entity may differ from other simulation entities in its structure and functionality, while still maintaining compatibility with the overall synchronization mechanism.

Within the software in the loop entity container, the software in the loop component may represent the actual software being tested or integrated into the simulation. This component may be a compiled executable, a script, or a library that performs specific functions relevant to the co-simulation scenario. The software in the loop component may interact with other simulation entities through standardized interfaces, allowing it to exchange data and participate in the co-simulation process.

The coordination client within the software in the loop entity may serve as an intermediary between the software in the loop component and the coordination server. This client may be responsible for translating the internal states and events of the software component into tokens that can be understood by the coordination server. Similarly, it may interpret tokens received from the server and trigger appropriate actions or state changes in the software component.

In some implementations, the software in the loop entity may include additional modules to facilitate its integration into the co-simulation environment. These modules may include:
1. A data adapter that converts data formats between the software component and other simulation entities.
2. A time synchronization module that aligns the software component's internal clock with the global simulation time.
3. A logging and monitoring subsystem that captures relevant metrics and debug information specific to the software in the loop execution.

The software in the loop entity may support various execution modes, such as real-time execution, accelerated time, or step-by-step debugging. These modes may be controlled through specific tokens exchanged between the coordination client and the coordination server, allowing for flexible integration of the software component into different simulation scenarios.

To enhance modularity and reusability, the software in the loop entity may implement a plugin architecture. This architecture may allow different software components to be easily swapped or updated without modifying the overall structure of the entity or its interaction with the co-simulation environment.

The container hosting the software in the loop entity may provide isolation and resource management capabilities, ensuring that the execution of the software component does not interfere with other simulation entities. This containerization may also facilitate deployment and scaling of the software in the loop entity across different computing environments, from local development setups to distributed cloud infrastructures.

According to another aspect of the present disclosure, a non-transitory computer-readable medium storing instructions is provided. When executed by a processor, the instructions cause the processor to perform a method for synchronization of simulation entities in an asynchronous co-simulation environment. The method includes instantiating a coordination server, instantiating a plurality of coordination clients associated with respective simulation entities, and establishing communication between the coordination server and the coordination clients. The method further includes configuring the coordination server to maintain a list of tokens, establishing peer-to-peer communication between the coordination server and the coordination clients, receiving, at the coordination server, tokens from the coordination clients, processing the received tokens according to a configuration, distributing updated token lists to all coordination clients, and synchronizing lifecycle states of the simulation entities based on the distributed token lists.

According to other aspects of the present disclosure, the method performed by the processor may include one or more of the following features. The method may include generating, by the coordination server, additional tokens based on the received tokens and the configuration. The configuration may define rules for generating the additional tokens based on combinations of received tokens. The method may include implementing the coordination server and the coordination clients in separate containers in a cloud computing environment. The containers may include a software in the loop entity comprising a software in the loop component and a coordination client. The method may include managing, by each coordination client, lifecycle states of simulation software in its respective simulation entity based on the tokens received from the coordination server.

Here is an addition to the summary section including a list of possible lifecycle states with brief explanations:

The system and method may utilize various lifecycle states to manage and synchronize the simulation entities. These lifecycle states may include, but are not limited to:
1. READY: Indicates that a simulation entity is initialized and prepared to begin execution, but has not yet started active simulation.
2. RUNNING: Signifies that a simulation entity is actively executing its simulation tasks and participating in the co-simulation process.
3. PAUSED: Represents a state where a simulation entity has temporarily halted its execution but can resume from its current point.
4. TERMINATED: Indicates that a simulation entity has completed its simulation tasks or has been stopped and will not resume execution.
5. ERROR: Signifies that a simulation entity has encountered an error condition and may require intervention or recovery procedures.
6. WAITING: Represents a state where a simulation entity is idle, waiting for specific conditions or signals from other entities before proceeding.
7. SYNCHRONIZING: Indicates that a simulation entity is in the process of aligning its state or data with other entities in the co-simulation environment.

These lifecycle states may be represented by tokens exchanged between the coordination clients and the coordination server, allowing for efficient management and synchronization of the simulation entities throughout the co-simulation process. The specific set of lifecycle states used in a particular implementation may vary based on the requirements of the co-simulation environment and the configuration of the system.

The foregoing general description of the illustrative embodiments and the following detailed description thereof are merely exemplary aspects of the teachings of this disclosure and are not restrictive.

### BRIEF DESCRIPTION OF FIGURES

Non-limiting and non-exhaustive examples are described with reference to the following figures.
FIG. 1 illustrates a block diagram of a system for reliable synchronization of simulation entities in an asynchronous co-simulation environment, according to aspects of the present disclosure.
FIG. 2 depicts a sequence diagram showing communication flow between components in a co-simulation environment, in accordance with example embodiments.

### DETAILED DESCRIPTION

The following description sets forth exemplary aspects of the present disclosure. It should be recognized, however, that such description is not intended as a limitation on the scope of the present disclosure. Rather, the description also encompasses combinations and modifications to those exemplary aspects described herein.

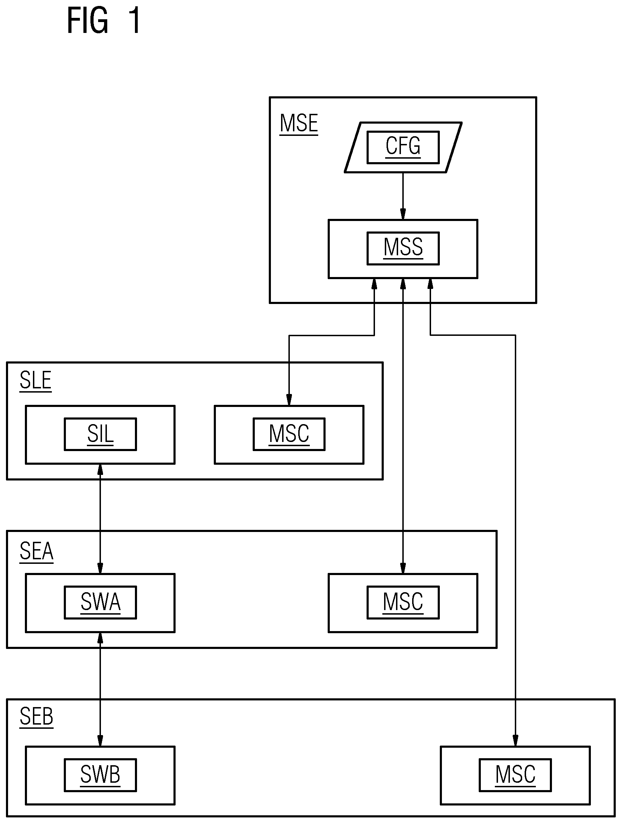

Figure 1 illustrates a block diagram of a system for reliable synchronization of simulation entities in an asynchronous co-simulation COS environment. The system includes a coordination server entity MSE comprising a coordination server MSS. The coordination server MSS operates based on a configuration CFG that defines rules for token generation and system behavior.

The system further comprises multiple simulation entities, including a simulation entity A SEA and a simulation entity B SEB. Each simulation entity includes a coordination client MSC configured to communicate with the coordination server MSS. The coordination clients MSC are responsible for sending tokens representing lifecycle states of their respective simulation entities to the coordination server MSS and waiting for specific tokens from the coordination server MSS to synchronize lifecycle states with other simulation entities.

Communication between the coordination server MSS and the coordination clients MSC is established using a peer-to-peer communication protocol. This allows for asynchronous operation and reliable message exchange between the entities and the server.

In addition to the simulation entities, the system includes a software in the loop entity SLE. The software in the loop entity SLE comprises a software in the loop component SIL and a coordination client MSC. This allows for integration of software components into the co-simulation COS environment alongside the simulation entities.

The coordination server MSS is instantiated to manage the overall synchronization process. It maintains a list of tokens, receives tokens from the coordination clients MSC, processes the received tokens according to the configuration CFG, and distributes updated token lists to all coordination clients MSC.

Multiple coordination clients MSC associated with their respective simulation entities SEA and SEB are instantiated. These coordination clients MSC manage the lifecycle states of their associated simulation entities and facilitate communication with the coordination server MSS.

The system architecture allows for flexible and reliable coordination of co-simulation COS processes, handling asynchronous operations and providing a centralized mechanism for lifecycle management across multiple entities in the co-simulation COS environment.

Figure 1 illustrates a detailed structure of the system for reliable synchronization of simulation entities in an asynchronous co-simulation COS environment. The system includes a coordination server entity MSE comprising a coordination server MSS. The coordination server MSS operates based on a configuration CFG that defines rules for token generation and system behavior.

The coordination server MSS is configured to maintain a list of tokens. These tokens represent various lifecycle states and events within the co-simulation COS environment. The configuration CFG for the coordination server MSS is provided at runtime via a configuration CFG file. This configuration CFG file allows for flexible and dynamic setup of the system behavior without requiring changes to the underlying software.

The system further comprises multiple simulation entities, including a simulation entity A SEA and a simulation entity B SEB. Each simulation entity includes a coordination client MSC configured to communicate with the coordination server MSS. The coordination clients MSC are responsible for sending tokens representing lifecycle states of their respective simulation entities to the coordination server MSS and waiting for specific tokens from the coordination server MSS to synchronize lifecycle states with other simulation entities.

A software in the loop entity SLE is also part of the system. The software in the loop entity SLE comprises a software in the loop component SIL and a coordination client MSC. This allows for integration of software components into the co-simulation COS environment alongside the simulation entities.

The software in the loop entity SLE and the simulation entities SEA and SEB are implemented as separate containers CNT in a cloud computing environment. This containerization approach provides isolation, portability, and scalability benefits, allowing for efficient deployment and management of the co-simulation COS components.

Each simulation entity SEA and SEB includes simulation software for performing co-simulation COS tasks. Specifically, simulation entity A SEA includes a simulation software A SWA, while simulation entity B SEB includes a simulation software B SWB. These simulation software components execute the actual co-simulation COS algorithms and models, while the coordination clients MSC manage their lifecycle states and synchronization.

The coordination server MSS acts as a central hub for token management and distribution. It receives tokens from the coordination clients MSC, processes them according to the rules defined in the configuration CFG, and distributes updated token lists to all coordination clients MSC. This centralized approach ensures consistent synchronization across all entities in the co-simulation COS environment.

The relationships between the coordination server MSS, coordination clients MSC, and the simulation software within each entity are designed to facilitate asynchronous operation and reliable message exchange. The coordination clients MSC act as intermediaries between the simulation software (SWA and SWB) and the coordination server MSS, managing the lifecycle states of their associated simulation entities and facilitating communication with the coordination server MSS.

This architecture allows for flexible and reliable coordination of co-simulation COS processes, handling asynchronous operations and providing a centralized mechanism for lifecycle management across multiple entities in the co-simulation COS environment. The use of containers CNT in a cloud computing environment further enhances the scalability and deployability of the system, making it suitable for large-scale co-simulation scenarios.

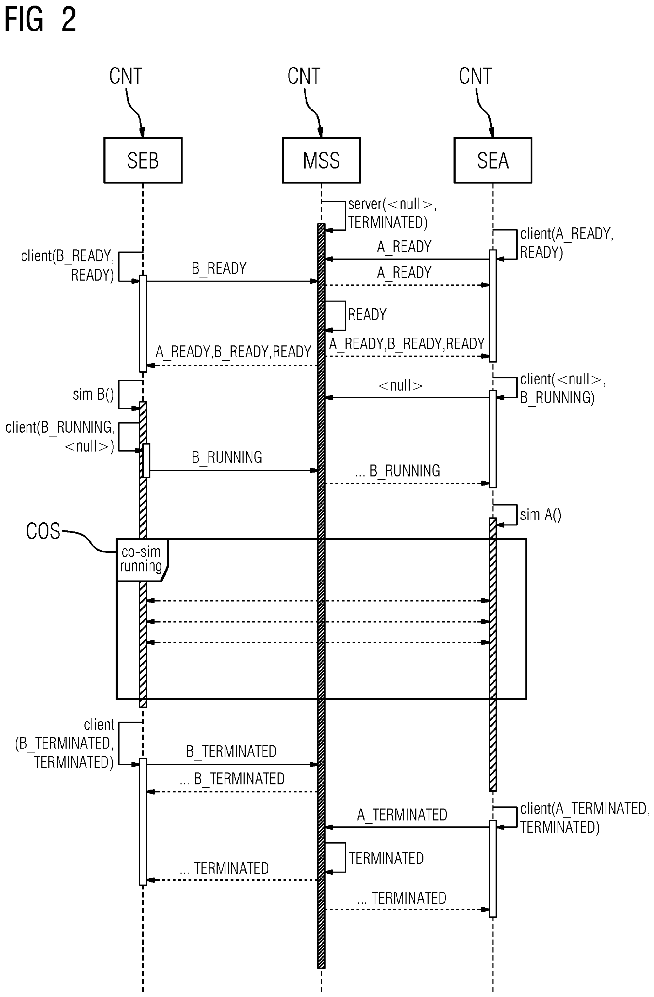

Figure 2 illustrates a sequence diagram depicting the communication flow between components in the co-simulation COS environment. The 2 parameters to the "client" and "server" calls depict the token being send, if not <null>, and the token waited for, if not <null>. The diagram shows three main components: a simulation entity B SEB, the coordination server MSS, and a simulation entity A SEA. Each of these components is implemented within a container CNT, which provides isolation and portability in a cloud computing environment.

The communication between the coordination server MSS and the coordination clients MSC within the simulation entities utilizes ZeroMQ as the peer-to-peer communication protocol. ZeroMQ enables asynchronous and reliable message exchange between the components. Additionally, Protocol Buffers (protobuf) are employed for message encoding, ensuring efficient and structured data serialization.

The sequence begins with the components in a READY state. The simulation entity B SEB initiates the process by sending a "B_READY" message to the coordination server MSS. This is followed by the simulation entity A SEA sending an "A_READY" message to the coordination server MSS. Upon receiving these messages, the coordination server MSS contains the list of the 2 tokens A_READY and B_READY and based on its configuration, adds the token READY to the list. It then responds by sending a message containing the complete token list A_READY, B_READY, and READY to both the simulation entity B SEB and the simulation entity A SEA.

Next, the simulation entity B SEB transitions to a RUNNING state and sends a "B_RUNNING" message to the coordination server MSS. The coordination server MSS then forwards this information in the form of a message with the updated, complete list of tokens, to the simulation entity A SEA. The simulation entity A SEA, upon receiving this notification, also transitions to a RUNNING state and sends an "B_RUNNING" message back to the coordination server MSS.

The diagram then shows a period of co-simulation execution, represented by a section labeled "co-sim running" with bidirectional arrows between the simulation entity B SEB and the simulation entity A SEA. During this phase, the simulation software B SWB and the simulation software A SWA within their respective simulation entities perform the actual co-simulation tasks.

After the co-simulation COS completes, the simulation entity B SEB enters a TERMINATED state and sends a "B_TERMINATED" message to the coordination server MSS. Shortly after, the simulation entity A SEA also enters a TERMINATED state and sends an "A_TERMINATED" message to the coordination server MSS. The coordination server MSS then adds a "TERMINATED" token to the list, based on its configuration, and sends a message with the complete list of tokens, including the "TERMINATED" token to both the simulation entity B SEB and the simulation entity A SEA, signaling the end of the co-simulation COS process.

Throughout the sequence, there are various client and server calls represented by small rectangles on the lifelines of each component. These represent internal processes or method calls within each entity, such as the coordination clients MSC sending and receiving messages. The 2 parameters to the "client" and "server" calls depict the token being send, if not <null>, and the token waited for, if not <null>.

The peer-to-peer communication established between the coordination server MSS and the coordination clients MSC allows for flexible and reliable message exchange. This communication architecture enables the system to handle asynchronous operations effectively, ensuring proper synchronization of lifecycle states across all entities in the co-simulation COS environment.

The token exchange mechanism, facilitated by the ZeroMQ protocol and Protocol Buffers encoding, allows for efficient and structured communication of lifecycle states and events. The coordination server MSS processes these tokens according to the configuration CFG, which defines the rules for token generation and system behavior.

This communication flow demonstrates how the system manages the lifecycle of a co-simulation COS process, from initialization to termination, while maintaining synchronization between multiple simulation entities. The use of containers CNT, peer-to-peer communication, and efficient message encoding contributes to the scalability and reliability of the co-simulation COS environment.

The token-based synchronization process forms the core of the reliable synchronization mechanism in the asynchronous co-simulation COS environment. This process involves the generation, exchange, and processing of tokens between the coordination server MSS and the coordination clients, enabling effective management of lifecycle states across multiple simulation entities.

Building upon this concept, the system is designed to transition between states in a directed acyclic graph. Each state transition in this graph is uniquely described by the addition of a single token. This structure ensures that the system's state progression is always moving forward, preventing cyclic behaviors that could lead to deadlocks or inconsistent states. The directed acyclic graph approach also facilitates easier reasoning about the system's behavior and simplifies the implementation of complex synchronization logic.

Another important aspect of the system's design is that each coordination client MSC is configured to be aware of and respond to only a subset of tokens relevant to its own behavior. This selective awareness means that individual coordination clients do not require knowledge of the complete set of system states. This design choice significantly reduces the complexity of each client and improves the system's scalability. As new simulation entities or software components are added to the co-simulation environment, they can be integrated without needing to understand the full spectrum of possible system states. Instead, each entity only needs to be programmed to recognize and react to the specific tokens that are relevant to its own operation.

This modular approach to token awareness also enhances the system's flexibility and maintainability. Changes or additions to the overall system state can be made without necessarily requiring updates to all existing components. Only the components directly affected by new tokens or states need to be modified, reducing the potential for introducing errors during system updates or expansions.

The combination of these features - the growing token list, the directed acyclic graph state transitions, and the selective token awareness of coordination clients - creates a robust and efficient synchronization mechanism. This mechanism is particularly well-suited for managing complex, distributed co-simulation environments where multiple entities need to coordinate their actions and maintain consistent lifecycle states across asynchronous operations.

The coordination server MSS receives tokens from the coordination clients. These tokens represent various lifecycle states and events within the co-simulation COS environment. Each coordination client MSC sends tokens that correspond to the current state or significant events of its associated simulation entity. For example, as illustrated in Figure 2, the coordination client MSC of simulation entity B SEB sends a "B_READY" token to the coordination server MSS when it reaches a ready state.

Upon receiving tokens from the coordination clients, the coordination server MSS processes these tokens according to the configuration CFG. The configuration CFG defines rules for interpreting the received tokens and determining what actions should be taken based on the current system state. This configuration-driven approach allows for flexible and dynamic system behavior without requiring changes to the underlying software.

Based on the received tokens and the rules defined in the configuration CFG, the coordination server MSS generates additional tokens. These additional tokens often represent higher-level system states or events that are derived from the combination of individual entity states. For instance, when the coordination server MSS receives "...READY" tokens from all simulation entities, it generates a system-wide "READY" token to indicate that the entire co-simulation COS environment is prepared to begin execution.

After processing the received tokens and generating any additional tokens, the coordination server MSS distributes updated token lists to all coordination clients. This distribution ensures that all entities in the co-simulation COS environment have a consistent view of the current system state. The coordination clients use this updated token list to determine their next actions and synchronize their lifecycle states with other simulation entities.

The coordination clients wait for specific tokens from the coordination server MSS to synchronize their lifecycle states. This waiting mechanism allows entities to pause their execution until certain conditions are met, as indicated by the presence of specific tokens. For example, as shown in Figure 2, simulation entity A SEA waits for the "B_RUNNING" token before transitioning to its own running state, ensuring proper sequencing of simulation activities.

The configuration CFG plays a role in defining the rules for generating additional tokens based on combinations of received tokens. These rules allow for complex synchronization logic to be implemented without hardcoding it into the coordination server MSS or clients. For example, the configuration CFG might specify that when "...READY" tokens are received from all simulation entities and the software in the loop entity SIL, a "SYSTEM_READY" token should be generated and distributed.

Throughout the co-simulation COS process, the coordination server MSS maintains a list of tokens. This list serves as a record of the current system state and is continuously updated as new tokens are received and generated. The maintenance of this token list allows for efficient state tracking and enables the coordination server MSS to make informed decisions about token generation and distribution.

The coordination clients send tokens representing lifecycle states of their simulation entities at various points during the co-simulation COS process. These tokens might indicate states such as "INITIALIZED," "CONFIGURED," "RUNNING," or "TERMINATED," allowing other entities and the coordination server MSS to react appropriately to changes in entity states.

To enhance reliability and prevent indefinite waiting, the coordination clients have the capability to set timeouts for receiving specific tokens. If an expected token is not received within the specified timeout period, the coordination client MSC can take appropriate action, such as generating an exception token or initiating a graceful shutdown procedure.

This token-based synchronization process, facilitated by the coordination server MSS and coordination clients, enables reliable and flexible management of lifecycle states in the asynchronous co-simulation COS environment. By leveraging a configuration-driven approach and maintaining a centralized token list, the system can adapt to various co-simulation COS scenarios while ensuring consistent synchronization across all participating entities.

The system implements comprehensive lifecycle management and exception handling mechanisms to ensure reliable synchronization of simulation entities in the asynchronous co-simulation COS environment. The token-based approach facilitates consistent state management across all entities, allowing for efficient coordination and graceful handling of exceptions.

The coordination server MSS manages the lifecycle of simulation entities through the exchange of tokens. Each simulation entity, including simulation entity A SEA and simulation entity B SEB, has a coordination client MSC that communicates with the coordination server MSS. The coordination clients manage the lifecycle states of their respective simulation software based on tokens received from the coordination server MSS.

For example, as shown in Figure 2, the coordination client MSC of simulation entity B SEB sends a "B_READY" token to the coordination server MSS when it reaches a ready state. Similarly, the coordination client MSC of simulation entity A SEA sends an "A_READY" token. The coordination server MSS processes these tokens and distributes updated token lists to all coordination clients, allowing them to synchronize their lifecycle states.

The system implements a fail-fast exception handling approach to manage errors and unexpected situations efficiently. In this approach, any specific exception that occurs in a simulation entity generates a single general exception token. This simplifies exception handling and ensures consistent behavior across all entities in the co-simulation COS environment.

The coordination server MSS is configured to generate a generic exception token based on specific exception tokens received from coordination clients. When a coordination client MSC encounters an exception in its simulation entity, it sends a specific exception token to the coordination server MSS. The coordination server MSS then processes this token according to its configuration CFG and generates a generic exception token that is distributed to all coordination clients.

Each simulation entity has a background coordination client MSC that continuously listens for generic exception tokens. When a generic exception token is received, the background coordination client MSC takes appropriate action based on the current lifecycle state of its simulation entity. This approach ensures that all entities in the co-simulation COS environment respond consistently to exceptions, regardless of their current state or the origin of the exception.

The software in the loop entity SIL also participates in this lifecycle management and exception handling process. Its coordination client MSC communicates with the coordination server MSS in the same manner as the simulation entities, ensuring seamless integration of software components into the co-simulation COS environment.

The container-based deployment of the coordination server MSS and simulation entities, as illustrated in Figure 1, further enhances the robustness of the lifecycle management and exception handling mechanisms. Each container CNT provides an isolated environment for its respective entity, allowing for independent management of lifecycle states while still maintaining synchronization through the token-based communication system.

This comprehensive approach to lifecycle management and exception handling ensures that the co-simulation COS environment remains in a consistent state throughout its operation, even in the presence of errors or unexpected events. The token-based synchronization mechanism, combined with the fail-fast exception handling approach, provides a reliable foundation for complex co-simulation COS scenarios involving multiple simulation entities and software in the loop components.

A number of implementations have been described. Nevertheless, it will be understood that various modifications may be made without departing from the spirit and scope of the disclosure. Accordingly, other implementations are within the scope of the following claims.

## Claims

1. A system for synchronization of simulation entities in an asynchronous co-simulation environment, comprising:
a coordination server entity (MSE) comprising a coordination server (MSS);
a plurality of simulation entities (SEA, SEB) each comprising a coordination client (MSC) configured to communicate with the coordination server (MSS);
**characterised in that**:
the coordination server (MSS) is configured to maintain a list of tokens, receive tokens from the coordination clients (MSC), process the received tokens according to a configuration (CFG), and distribute updated token lists to the coordination clients (MSC);
the communication between the coordination server (MSS) and the coordination clients (MSC) uses a peer-to-peer communication protocol; and
each coordination client (MSC) is configured to send tokens representing lifecycle states of its respective simulation entity to the coordination server (MSS), and wait for specific tokens from the coordination server (MSS) to synchronize lifecycle states with other simulation entities.

2. The system of claim 1, wherein the coordination server (MSS) is configured to generate additional tokens based on the received tokens and the configuration (CFG).

3. The system of claim 2, wherein the configuration (CFG) defines rules for generating the additional tokens based on combinations of received tokens.

4. The system of claim 1, further comprising a software in the loop entity (SLE) comprising a software in the loop component (SIL) and a coordination client (MSC).

5. The system of claim 4, wherein the software in the loop entity (SLE), and the simulation entities (SEA, SEB) are implemented as separate containers (CNT) in a cloud computing environment.

6. The system of claim 1, wherein each simulation entity (SEA, SEB) further comprises simulation software (SWA, SWB) configured to perform co-simulation (COS) tasks.

7. The system of claim 6, wherein the coordination clients (MSC) are configured to manage lifecycle states of their respective simulation software (SWA, SWB) based on the tokens received from the coordination server (MSS).

8. The system of claim 1, wherein the list of tokens maintained by the coordination server (MSS) is configured to only grow, with tokens being added and not removed.

9. The system of claim 8, wherein the system is configured to transition between states in a directed acyclic graph, with each state transition uniquely described by the addition of a single token.

10. The system of claim 1, wherein each coordination client (MSC) is configured to be aware of and respond to only a subset of tokens relevant to its own behavior, without requiring knowledge of the complete set of system states.

11. A method for synchronization of simulation entities in an asynchronous co-simulation environment, comprising:
maintaining, by a coordination server (MSS), a list of tokens;
receiving, by the coordination server (MSS), tokens from a plurality of coordination clients (MSC) associated with respective simulation entities (SEA, SEB);
**characterised in that** the method further comprises:
processing, by the coordination server (MSS), the received tokens according to a configuration (CFG);
distributing, by the coordination server (MSS), updated token lists to the coordination clients (MSC);
sending, by each coordination client (MSC), tokens representing lifecycle states of its respective simulation entity to the coordination server (MSS); and
waiting, by each coordination client (MSC), for specific tokens from the coordination server (MSS) to synchronize lifecycle states with other simulation entities.

12. The method of claim 11, further comprising:
generating, by the coordination server (MSS), additional tokens based on the received tokens and the configuration (CFG).

13. The method of claim 12, wherein the configuration (CFG) defines rules for generating the additional tokens based on combinations of received tokens.

14. The method of claim 11, further comprising:
implementing the coordination server (MSS) and the coordination clients (MSC) in separate containers (CNT) in a cloud computing environment.

15. The method of claim 14, wherein the containers (CNT) include a software in the loop entity (SLE) comprising a software in the loop component (SIL) and a coordination client (MSC).

16. The method of claim 11, further comprising:
performing, by simulation software (SWA, SWB) in each simulation entity (SEA, SEB), co-simulation (COS) tasks based on the synchronized lifecycle states.

17. The method of claim 16, further comprising:
managing, by each coordination client (MSC), lifecycle states of its respective simulation software (SWA, SWB) based on the tokens received from the coordination server (MSS).

18. The method of claim 11, wherein maintaining the list of tokens comprises only adding tokens to the list without removing any tokens.

19. The method of claim 18, further comprising:
transitioning between system states in a directed acyclic graph, with each state transition uniquely described by the addition of a single token.

20. A non-transitory computer-readable medium storing instructions that, when executed by a processor, cause the processor to perform a method for synchronization of simulation entities in an asynchronous co-simulation environment, the method comprising:
instantiating a coordination server (MSS);
instantiating a plurality of coordination clients (MSC) associated with respective simulation entities (SEA, SEB);
establishing communication between the coordination server (MSS) and the coordination clients (MSC);
**characterised in that** the method further comprises:
configuring the coordination server (MSS) to maintain a list of tokens;
establishing peer-to-peer communication between the coordination server (MSS) and the coordination clients (MSC);
receiving, at the coordination server (MSS), tokens from the coordination clients (MSC); processing the received tokens according to a configuration (CFG);
distributing updated token lists to the coordination clients (MSC); and
synchronizing lifecycle states of the simulation entities (SEA, SEB) based on the distributed token lists.
